# FASCICULE DE BREVET EUROPEEN

(11) **EP 1 893 442 B1**
(45) Date de publication et mention de la délivrance du brevet: **13.04.2011**
(21) Numéro de dépôt: 06764833.7
(22) Date de dépôt: 02.06.2006
(51) Int. Cl.: B60R 5/04

(54) **AGENCEMENT D'UNE TABLETTE ARRIERE DE VEHICULE AUTOMOBILE COMPORTANT DES MOYENS DE CIRCULATION D'AIR PERFECTIONNES**
ANORDNUNG EINES HINTEREN ABLAGEFACHS EINES AUTOMOBILS MIT VERBESSERTEN LUFTZIRKULATIONSMITTELN
ARRANGEMENT OF A REAR PARCEL SHELF OF A MOTOR VEHICLE COMPRISING IMPROVED AIR CIRCULATING MEANS

(30) Priorité: 16.06.2005 FR 0551647
(43) Date de publication de la demande: 05.03.2008
(73) Titulaire: Renault SAS, 92100 Boulogne Billancourt (FR)
(72) Inventeur: CHATELAIN, Eric, F-91210 Draveil (FR); JOSSE, Pascal, F-78500 Sartrouville (FR)
(86) Numéro de dépôt international: PCT/FR2006/050510
(87) Numéro de publication internationale: WO 2006/134286

(56) Documents cités:
- JP-A- 5 238 323
- JP-A- 7 277 134
- JP-A- 59 038 110
- PATENT ABSTRACTS OF JAPAN vol. 009, no. 176 (M-398), 20 juillet 1985 (1985-07-20) & JP 60 045443 A (NISSAN JIDOSHA KK), 11 mars 1985 (1985-03-11)

## Description

L'invention concerne un agencement d'une tablette arrière de séparation d'un habitacle et d'un coffre de véhicule automobile, dans lequel une tablette centrale est supportée par une tablette latérale présentant un premier bord longitudinal solidaire d'un élément d'habillage du véhicule et un deuxième bord comportant une surface d'appui destinée à recevoir la tablette centrale et se prolongeant par une paroi s'étendant vers le bas, et dans lequel des moyens de circulation d'un flux d'air sont constitués par au moins une grille, agencée entre l'habitacle et le coffre, sur la tablette latérale tel que décrit dans le document JP-A-60045443, et une ouverture ménagée à l'intérieur du coffre, dans la paroi située sous la surface d'appui.

Une tablette arrière de véhicule automobile comporte généralement une tablette centrale prenant appui sur une tablette latérale. Il est par ailleurs nécessaire de prévoir une circulation d'air à l'intérieur du véhicule de façon à équilibrer les différentes pressions, en particulier entre le coffre et l'habitacle. Une grille ménagée, entre l'habitacle et le coffre, dans la tablette latérale ainsi que des orifices portés, à l'intérieur du coffre, par une paroi verticale de la tablette latérale en regard de la tablette centrale permettent une circulation d'air entre le coffre et l'habitacle.

Cependant, en particulier lorsque la porte du coffre est ouverte, les parties techniques situées sous la tablette arrière, voire même l'intérieur du coffre sont visibles, ce qui procure à un utilisateur une impression de mauvaise finition et nuit donc à la qualité perçue du véhicule.

Afin de pallier ces inconvénients, l'invention a pour objet un agencement d'une tablette arrière, comportant des moyens de circulation d'air, à la fois esthétique, économique et offrant de bonnes performances.

A cet effet, l'invention propose un agencement de tablette arrière du type cité ci-dessus, caractérisé en ce qu'une cloison est agencée sous la grille et s'étend selon un plan sensiblement parallèle au plan de la tablette latérale en laissant un espace, de manière à obturer la vision, au travers de la première grille d'une zone située sous la tablette latérale, tout en permettant une circulation d'air entre le coffre et l'habitacle.

Selon d'autres caractéristiques de l'invention:
- La cloison est issue de moulage avec l'élément d'habillage.
- La cloison forme un élément d'isolation phonique.
- La cloison est en outre un élément de renforcement de la surface d'appui lorsque la tablette centrale est soumise à une charge ou un effort importants.
- La cloison est munie d'un élément d'absorption.
- La cloison porte au moins un élément technique.

D'autres caractéristiques et avantages de l'invention apparaîtront à la lecture de la description d'exemples de réalisation d'un agencement de tablette arrière en référence aux dessins annexés dans lesquels :
- La figure 1 est une vue en perspective d'un agencement d'une partie de tablette selon l'invention.
- La figure 2 est une vue en coupe transversale de la figure 1.

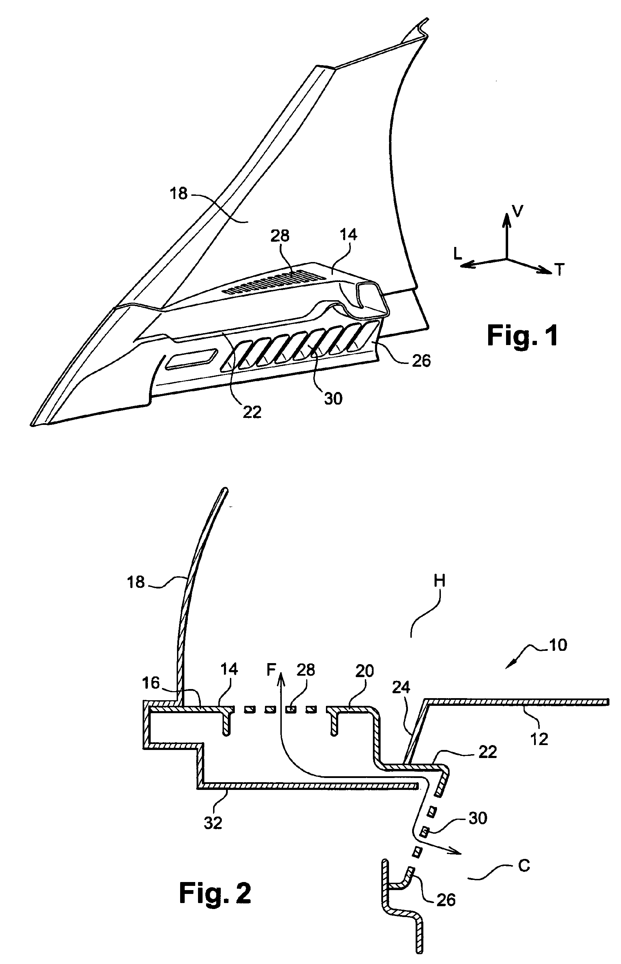

Dans la description qui suit, nous prendrons à titre non limitatif une orientation longitudinale, verticale et transversale indiquée par le trièdre L,V,T des figures 1 et 2.

Tel que représenté aux figures 1 et 2, une tablette arrière 10 de séparation d'un habitacle H et d'un coffre C de véhicule automobile comporte une tablette centrale 12 et deux tablettes latérales 14 situées de part et d'autre de la tablette centrale 12. L'agencement de tablette étant symétrique par rapport à un axe médian longitudinal, seule une moitié de la tablette arrière sera décrite, l'autre étant identique.

La tablette latérale 14 comporte un premier bord longitudinal 16 solidarisé, par clippage, par exemple, à un élément de structure 18 tel qu'une garniture de custode. Un deuxième bord longitudinal 20 de la tablette latérale 14 comporte une surface d'appui 22 d'un rebord 24 de la tablette centrale 12. La surface d'appui 22 se prolonge vers le bas par une paroi 26.

La tablette arrière 10 comporte des moyens de circulation d'air entre l'habitacle H et le coffre C constitués par une première grille 28 agencée sur la tablette latérale 14, entre l'habitacle H et le coffre C et par une ouverture agencée à l'intérieur du coffre C, dans la paroi 26. Cette ouverture peut être partiellement obturée par une deuxième grille 30 qui peut être formée par une série de lamelles appelées « ouies ».

Des pièces techniques (non représentées), telles que des fixations, ou des moyens de canalisation d'air par exemple, se trouvent dans la zone située sous la tablette latérale 14 et peuvent être visibles depuis la première grille 28. Le contenu du coffre C, et plus particulièrement les bagages, par exemple, peuvent aussi être visibles.

Une cloison 32 est donc agencée, selon un plan parallèle au plan de la tablette latérale 14, sous la première grille 28 et, plus particulièrement, au-dessus de la deuxième grille 30. La cloison 32 peut être issue de moulage avec la garniture de custode 18, ce qui présente l'avantage de réduire le nombre de pièces nécessaires, mais aussi de garantir une uniformité de la couleur par rapport à l'habillage intérieur 18 du véhicule dans le cas où les trous de la grille 28 sont gros.

En outre, la cloison 32 s'étend sous la surface d'appui 22, mais pas jusqu'à la paroi 26, de manière à laisser un espace entre la cloison 32 et la paroi 26 pour qu'un flux d'air F puisse circuler sous la tablette latérale. L'espace ainsi prévu est adapté pour assurer une circulation d'air suffisamment importante entre le coffre C et l'habitacle H. Ainsi, la cloison 32 permet de masquer les pièces techniques tout en conservant les propriétés de circulation d'air de la tablette arrière 10.

En outre, la présence de la cloison 32, en canalisant le flux d'air en circulation, permet de réduire les bruits émis depuis le coffre C en direction de l'habitacle H et forme ainsi un moyen d'isolation phonique.

Enfin, dans le cas où une charge lourde ou un effort important est appliqué à la tablette centrale 12, la surface d'appui 22 va se déformer et entrer en contact avec la cloison 32, ce qui va ainsi permettre de renforcer ladite surface d'appui 22.

Avantageusement, la cloison 32 peut servir de support d'un élément absorbant tel qu'une plaque de mousse, par exemple, mais aussi à des éléments techniques tels que des câbles.

## Revendications

1. Agencement d'une tablette arrière (10) de séparation d'un habitacle (H) et d'un coffre (C) de véhicule automobile, dans lequel une tablette centrale (12) est supportée par une tablette latérale (14) présentant un premier bord longitudinal (16) solidaire d'un élément d'habillage (18) du véhicule et un deuxième bord (20) comportant une surface d'appui (22) destinée à recevoir la tablette centrale (12) et se prolongeant par une paroi (26) s'étendant vers le bas, et dans lequel des moyens de circulation d'un flux d'air (F) sont constitués par au moins une grille (28), agencée entre l'habitacle (H) et le coffre (C), sur la tablette latérale (14) et une ouverture ménagée à l'intérieur du coffre (C), dans la paroi (26) située sous la surface d'appui (22), **caractérisé en ce qu'**une cloison (32) est agencée sous la grille (28) et s'étend selon un plan sensiblement parallèle au plan de la tablette latérale (14) en laissant un espace, de manière à obturer la vision, au travers de la première grille (28) d'une zone située sous la tablette latérale (14), tout en permettant une circulation d'air entre le coffre (C) et l'habitacle (H).

2. Agencement d'une tablette arrière selon la revendication 1, **caractérisé en ce que** la cloison (32) est issue de moulage avec l'élément d'habillage (18).

3. Agencement d'une tablette arrière (10) selon l'une quelconque des revendications précédentes, **caractérisé en ce que** la cloison (32) forme un élément d'isolation phonique.

4. Agencement d'une tablette arrière (10) selon l'une quelconque des revendications précédentes, **caractérisé en ce que** la cloison (32) est en outre un élément de renforcement de la surface d'appui (22) lorsque la tablette centrale (12) est soumise à une charge ou un effort importants.

5. Agencement d'une tablette arrière (10) selon l'une quelconque des revendications précédentes, **caractérisé en ce que** la cloison (32) est munie d'un élément d'absorption.

6. Agencement d'une tablette arrière (10) selon l'une quelconque des revendications précédentes, **caractérisé en ce que** la cloison (32) porte au moins un élément technique.

## Claims

1. Arrangement of a rear parcel shelf (10) separating a passenger compartment (H) and a boot (C) of a motor vehicle, in which a central parcel shelf (12) is supported by a lateral parcel shelf (14) having a first longitudinal edge (16) firmly attached to a cladding element (18) of the vehicle and a second edge (20) having a bearing surface (22) intended to receive the central parcel shelf (12) and being extended by a wall (26) extending downwards, and in which means of circulating an airflow (F) are formed by at least one grille (28), arranged between the passenger compartment (H) and the boot (C), on the lateral parcel shelf (14) and an opening formed inside the boot (C), in the wall (26) situated under the bearing surface (22), **characterized in that** a partition (32) is arranged under the grille (28) and extends in a plane substantially parallel to the plane of the lateral parcel shelf (14) leaving a space, so as to block the view, through the first grille (28), of an area situated under the lateral parcel shelf (14), while allowing a circulation of air between the boot (C) and the passenger compartment (H).

2. Arrangement of a rear parcel shelf according to Claim 1, **characterized in that** the partition (32) is obtained from moulding with the cladding element (18).

3. Arrangement of a rear parcel shelf (10) according to any one of the preceding claims, **characterized in that** the partition (32) forms a sound insulation element.

4. Arrangement of a rear parcel shelf (10) according to any one of the preceding claims, **characterized in that** the partition (32) is also a reinforcing element of the bearing surface (22) when the central parcel shelf (12) is subjected to a significant load or force.

5. Arrangement of a rear parcel shelf (10) according to any one of the preceding claims, **characterized in that** the partition (32) is provided with an absorption element.

6. Arrangement of a rear parcel shelf (10) according to any one of the preceding claims, **characterized in that** the partition (32) supports at least one technical element.

## Patentansprüche

1. Anordnung einer hinteren Platte (10) für die Trennung eines Fahrgastraums (H) und eines Kofferraums (C) eines Kraftfahrzeugs, wobei eine mittlere Platte (12) durch eine seitliche Platte (14) unterstützt ist, die eine erste Längskante (16) aufweist, die mit einem Verkleidungselement (18) des Fahrzeugs fest verbunden ist, und eine zweite Kante (20) aufweist, die eine Abstützoberfläche (22) enthält, die dazu vorgesehen ist, die mittlere Platte (12) aufzunehmen, und durch eine Wand (26) verlängert ist, die sich nach unten erstreckt, wobei Mittel für die Zirkulation eines Luftstroms (F) durch wenigstens ein Gitter (28) gebildet sind, das zwischen dem Fahrgastraum (H) und dem Kofferraum (C) in der seitlichen Platte (14) angeordnet ist, und durch eine Öffnung gebildet sind, die innerhalb des Kofferraums (C) in der Wand (26), die sich unter der Abstützoberfläche (22) befindet, ausgebildet ist, **dadurch gekennzeichnet, dass** unter dem Gitter (28) eine Trennwand (32) angeordnet ist, die sich in einer Ebene erstreckt, die zu der Ebene der seitlichen Platte (14) im Wesentlichen parallel ist und einen Zwischenraum freilässt, derart, dass die Sicht durch das erste Gitter (28) von einer Zone, die sich unter der seitlichen Platte (14) erstreckt, versperrt ist und dennoch eine Luftzirkulation zwischen dem Kofferraum (C) und dem Fahrgastraum (H) möglich ist.

2. Anordnung einer hinteren Platte nach Anspruch 1, **dadurch gekennzeichnet, dass** die Trennwand (32) mit dem Verkleidungselement (18) gegossen ist.

3. Anordnung einer hinteren Platte (10) nach einem der vorhergehenden Ansprüche, **dadurch gekennzeichnet, dass** die Trennwand (32) ein Schallisolationselement bildet.

4. Anordnung einer hinteren Platte (10) nach einem der vorhergehenden Ansprüche, **dadurch gekennzeichnet, dass** die Trennwand (32) außerdem ein Verstärkungselement der Abstützoberfläche (22) ist, wenn die mittige Platte (12) einer großen Last oder einer großen Kraft unterliegt.

5. Anordnung einer hinteren Platte (10) nach einem der vorhergehenden Ansprüche, **dadurch gekennzeichnet, dass** die Trennwand (32) mit einem Absorptionselement versehen ist.

6. Anordnung einer hinteren Platte (10) nach einem der vorhergehenden Ansprüche, **dadurch gekennzeichnet, dass** die Trennwand (32) wenigstens ein technisches Element trägt.
